# EUROPÄISCHE PATENTSCHRIFT

(11) **EP 2 101 396 B1**
(45) Veröffentlichungstag und Bekanntmachung des Hinweises auf die Patenterteilung: **01.08.2018**
(21) Anmeldenummer: 08004833.3
(22) Anmeldetag: 14.03.2008
(51) Int. Cl.: H02K 1/30, H02K 7/00, H02K 1/27, H02K 7/108

(54) **Rotor für eine elektrische Maschine und elektrische Maschine für einen Kraftfahrzeugantriebsstrang**
Rotor for an electric machine and electric machine for power transmission in a motor vehicle
Rotor pour une machine électrique et machine électrique pour un faisceau d'entraînement de véhicule automobile

(43) Veröffentlichungstag der Anmeldung: 16.09.2009
(73) Patentinhaber: ZF Friedrichshafen AG, 88046 Friedrichshafen (DE)
(72) Erfinder: Jafoui, Khalid, 96191 Viereth-Trunstadt (DE); Schäflein, Alexander, 97422 Schweinfurt (DE)

(56) Entgegenhaltungen:
- EP-A- 1 511 154
- DE-A1- 10 226 572
- DE-U1- 8 711 573
- JP-A- 2005 151 731
- US-A1- 2005 099 080
- US-A1- 2005 127 768

## Beschreibung

Die Erfindung betrifft einen Rotor für eine elektrische Maschine gemäß dem Oberbegriff von Patentanspruch 1 und eine elektrische Maschine für einen Fahrzeugantriebstrang mit einem solchen Rotor.

Elektrische Maschinen und deren Einsatz als alleinige oder zusätzliche Antriebsquelle in einem Kraftfahrzeug sind für Elektro- oder Hybridfahrzeuge allgemein bekannt. Üblicherweise umfasst ein Rotor einer elektrischen Maschine einen Rotorträger mit einem zylindrischen Tragbereich zur Aufnahme einer magnetflussführenden Rotorkomponente. Ein solcher Rotor erzeugt durch die magnetische Wechselwirkung mit dem Stator der elektrischen Maschine ein je nach Anwendung antreibendes oder bremsendes Drehmoment, um dieses auf andere, mit dem Rotor drehfest verbundene Elemente zu übertragen oder um elektrische Energie zur Einspeisung in ein Fahrzeugbordnetz zu erzeugen. Dieses Drehmoment muss von dem Verbindungsbereich des Rotorträgers mit der magnetflussführenden Rotorkomponente aufgenommen werden, was eine konstruktive Ausgestaltung insbesondere auf der Grundlage des beim Betreiben der elektrischen Maschine auftretenden Drehmoments und dessen zeitlichen Änderungsbetrags erfordert.

Mit der DE 102 26 572 A1 ist eine gattungsgemäße elektrische Maschine in Innenläuferbauart bekannt geworden, welche einen topfförmigen Rotorträger mit einem axialen und einem radialen Tragbereich umfasst. Die Außenumfangsfläche des Rotorträgers weist ein sich in Umfangsrichtung am Rotor erstreckendes Formschlussprofil zur drehgesicherten Aufnahme eines Rotorblechpakets auf. Zur Abgabe eines Drehmomentes ist der Rotor mit dessen radialen Tragbereich in üblicher Weise mit einer Rotorwelle verbunden.

Eine weitere Innenläufermaschine mit einem an einer Rotorwelle festgelegten Rotorträger wird in der EP 1 511 154 A2 beschrieben. Dieser Rotorträger weist an dessen Außenumfang mehrere axial verlaufende Nuten mit darin eingesetzten Permanentmagneten auf. Die Verbindung des Rotorträgers mit der Rotorwelle ist als Presspassung ausgeführt.

Die DE 87 11 573 U1 offenbart einen noch weiteren Rotor für eine Innenläufermaschine, deren Rotorträger als Kunststoffgussteil ausgebildet und wozu eine auf der Rotorwelle aufgedrückte Stahl-Sechskantmutter von Kunststoff umspritzt ist. An seinem Außenumfang nimmt das Kunststoffteil einen axial beidseitig eingespritzten Ringmagneten mit einer kreiszylindrischen Innenumfangsfläche auf.

Die Erfindung stellt sich von dem erläuterten Stand der Technik ausgehend die Aufgabe, einen Rotor für eine elektrische Maschine eines Kraftfahrzeugantriebsstranges mit einer besonders drehfesten Verbindung des Rotorträgers mit einer magnetflussführenden Rotorkomponente bereitzustellen, wobei der Rotor gleichfalls in einfacher Weise in eine Drehmitnahmeverbindung mit einem weiteren Element bringbar sein soll. Des Weiteren soll eine elektrische Maschine mit einem solchen Rotor zur Verwendung in einem Kraftfahrzeugantriebsstrang bereitgestellt werden.

Die Erfindung löst die Aufgaben mit einem gattungsgemäßen Rotor, welcher die im Patentanspruch 1 aufgeführten Merkmale umfasst und mit einer elektrischen Maschine mit einem solchen Rotor gemäß Patentanspruch 8.

Der erfindungsgemäße Rotor zeichnet sich gegenüber dem Stand der Technik dadurch aus, dass der axiale Tragbereich auch an der inneren Umfangsfläche ein Formschlussprofil zur Aufnahme eines mit dem Rotor in Drehmitnahme stehenden Elements aufweist, wobei Vertiefungen im Formschlussprofil der einen Umfangsfläche gleichzeitig als Erhöhungen im Formschlussprofil der jeweils davon abgewandten anderen Umfangsfläche dienen, so dass das an der einen Umfangsfläche ausgeführte Formschlussprofil gleichzeitig das Formschlussprofil der jeweils anderen Umfangsfläche ausbildet. Hierbei kann das Formschlussprofil insbesondere als Radialverzahnung mit verschiedensten Zahngeometrien ausgeführt sein.

In den abhängigen Ansprüchen sind vorteilhafte Weiterbildungen oder Ausgestaltungen der Erfindung angegeben.

Gemäß einer ersten vorteilhaften Ausgestaltung ist vorgesehen, dass die magnetflussführende Komponente als Blechpaket mit einem zu dem axialen Tragbereich des Rotors korrespondierenden Formschlussprofil ausgebildet ist. Wenn die elektrische Maschine in einem breiten Temperaturbereich betrieben werden soll oder sich beim Betrieb stark erhitzt kann zur Erzielung eines sicheren Sitzes das, das Formschlussprofil aufweisende Bauteil aus einem Werkstoff gefertigt sein, dessen Ausdehnungskoeffizient demjenigen des Blechpakets zumindest näherungsweise entspricht. Hierfür bietet sich insbesondere ein Eisenwerkstoff, z.B. ein Stahl an.

Es ist bei einer permanenterregten Synchronmaschine auch möglich, die Permanentmagnete direkt, d.h. ohne ein Blechpaket, am Rotorträger anzuordnen. Die magnetflussführende Komponente wird in diesem Fall von mindestens einen Permanentmagneten gebildet, welcher z.B. als einteiliger Ringmagnet ausgebildet sein kann. Es können jedoch auch mehrere am Umfang des Rotorträgers verteilte Permanentmagnete vorliegen, wobei in beiden Fällen der oder die Permanentmagnete eine zu dem Formschlussprofil des axialen Tragbereichs korrespondierende Außenkontur aufweist bzw. aufweisen. Darunter soll auch eine Vielzahl von Permanentmagneten fallen, welche einzeln in das Formschlussprofil, z.B. vertiefte Aufnahmeräume am zylindrischen Tragbereich eingesetzt werden. Im letzten Fall sind ggf. zur Festlegung der einzelnen Magnetpole zusätzliche Sicherungselemente vorgesehen bzw. erforderlich.

Es ist für die vorstehend beschriebenen Varianten möglich, den zylindrischen Rotorträger mehrteilig, mit einem das Formschlussprofil aufweisenden radial innen und/oder radial außen angeordneten Element zu gestalten. Mit besonderen Vorteil ist gemäß einer weiteren Ausgestaltungsvariante vorgesehen, dass zumindest der axiale Tragbereich aus einem Blechkörper gefertigt ist und dass das Formschlussprofil oder die Formschlussprofile an dem Blechkörper ausgeführt ist/sind. Insbesondere wird hierzu ein kalt- oder warmumformbares Blechmaterial genutzt, so dass der Rotorträger mit dessen radialen und zylindrischen Tragbereichen einteilig aus einem ebenflächigen oder rohrförmigen Rohling geformt werden kann, wobei gleichzeitig zumindest ein Formschlussprofil angeformt wird.

Insbesondere im Zusammenhang mit dem Umformvorgang können die an beiden Umfangsflächen vorgesehenen Formschlussprofile gleichzeitig erzeugt werden. Diese können eine voneinander unabhängige Funktion aufweisen.

Das mit dem Rotor in Drehmitnahme stehende Element kann auf vielfältige Art und Weise ausgestaltet sein. Das Element kann beispielsweise ein Teilbereich einer Kupplung, eines Torsionsschwingungsdämpfers, einer Antriebswelle usw. sein. In einer bevorzugten Ausgestaltung ist das Formschlussprofil als Lamellenträger zur Aufnahme von Lamellen einer schaltbaren Kupplung ausgebildet. Der Rotorträger kann mit dessen Formschlussprofil auch das Eingangs- oder Ausgangsteil einer Steckverzahnung zur Verbindung mit einer weiteren Antriebsstrangkomponente bilden. Hierdurch kann eine einfache Montageschnittstelle zur Montage des Antriebsstranges ausgebildet werden.

Nachfolgend wird die Erfindung unter Bezugnahme auf die beigefügten Figuren beispielhaft erläutert.

Es zeigen:
- Fig. 1: eine schematische Axialschnittdarstellung einer elektrischen Maschine in Innenläuferbauweise mit einem topfförmigen Rotor, in dessen Innenraum eine Lamellenkupplung ausgebildet ist;
- Fig. 2a: eine Radialansicht eines Rotorträgers mit einem an der Innen- und der Außenumfangsfläche ausgebildeten Formschlussprofil zur Aufnahme eines Blechpakets und eines Kupplungslamellenpakets;
- Fig. 2b: eine Radialansicht eines Rotorträgers mit einem an der Außenumfangsfläche ausgebildeten Formschlussprofil zur Aufnahme von einzelnen Permanentmagneten;
- Fig. 2c: eine Radialansicht des Rotorträgers gemäß Fig. 2, wobei sich ein Permanentmagnet über mehrere Perioden des Formschlussprofils erstreckt.

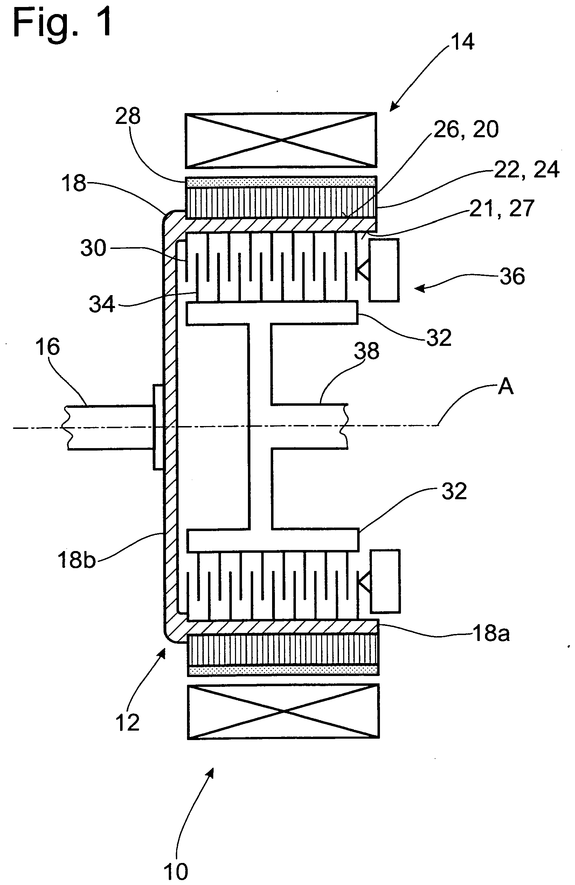

Fig. 1 zeigt eine schematische Axialschnittdarstellung einer permanentmagneterregten Synchronmaschine 10 zum Einbau in einen Fahrzeugantriebsstrang in Innenläuferbauart mit einem topfförmigen Rotor 12, der von einem wicklungstragenden Stator 14 umgeben ist und der mittels einer Rotorwelle 16 um eine Drehachse A rotieren kann. Der Rotor 12 weist einen als Umformteil aus einem Stahlblech durch Drückwalzen oder Tiefziehen gefertigten Rotorträger 18 mit einem sich axial zur Drehachse erstreckenden axialen Tragbereich 18a und einen daran anschließenden zur Verbindung mit der Rotorwelle 16 vorgesehenen radialen Tragbereich 18b auf. Der axiale Tragbereich 18a weist, wie dieses im Zusammenhang mit den weiteren Figuren noch detaillierter ausgeführt wird, ein sich in Axialrichtung des Rotors 12 erstreckendes Formschlussprofil 20 zur formschlüssigen Aufnahme einer magnetflussführenden Rotorkomponente auf, welche in diesem Beispiel als ein in bekannter Weise aus einer Vielzahl von Blechlamellen 22 stanzpaketiertes Blechpaket 24 gebildet und an der Außenumfangsfläche 26 des Tragbereichs 18a angeordnet ist. An der Außenumfangsfläche des Blechpakets 24 sind eine Mehrzahl von Permanentmagneten 28 angeordnet, welche beim Betreiben der elektrischen Maschine 10 mit einer Spulenwicklung des Stators 14 in eine elektromagnetische Wechselwirkung treten können und ein motorisches oder generatorisches Moment erzeugen können.

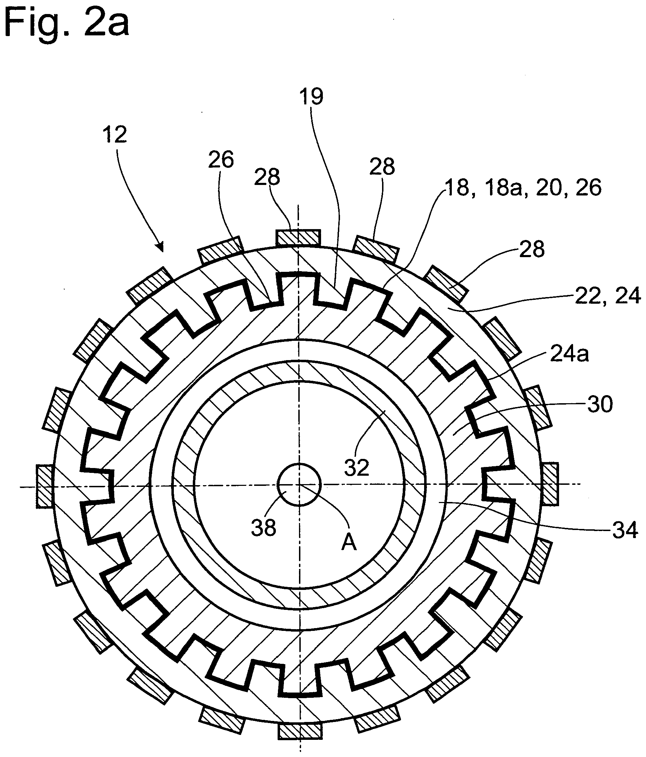

Die Fig. 2a zeigt eine schematische und teilweise Radialansicht des Rotors 12 mit dem Rotorträger 18 und mit dem daran angeordneten Blechpaket 24. Das Formschlussprofil 20 des axialen Tragbereichs 18a ist direkt am Blechkörper als sich in axialer Richtung durchgehend am Rotor 10 erstreckende Radialverzahnung mit einer leicht trapezförmigen Zahnstruktur mit sich nach radial außen erweiternden Nuten 19 ausgeführt. Das Formschlussprofil kann alternativ auch mit rechteckigen Elementen oder als Schwalbenschwanzprofil mit sich nach radial außen verengenden Nuten ausgeführt werden, was sich insbesondere zur Anordnung einzelner Permanentmagnete eignet. Es sind in axialer Richtungen jedoch auch Unterbrechungen des Formschlussprofils 20 möglich. Wesentlich ist, dass die magnetflussführende Rotorkomponente 22, 24 axial oder ggf. radial am Rotorträger 18a montierbar ist. Vorliegend ist demgemäß an dem Blechpaket 24, genauer an dessen radial inneren Umfangsfläche, ein zu dem axialen Tragbereich 18a korrespondierendes Formschlussprofil 24a ausgebildet.

Es ist in der Radialdarstellung von Fig. 2a erkennbar, dass das an der äußeren Umfangsfläche 26 des Tragbereichs 18a ausgeführte Formschlussprofil 20 gleichzeitig das Formschlussprofil 21 der inneren Umfangsfläche 27 ausbildet, welches dadurch zur Aufnahme eines mit dem Rotor 10 im Antriebsstrang eines Fahrzeuges in Drehmitnahme stehenden Elements 30, welches hier als Außenlamelle oder Außenlamellenpaket 30 einer Kupplung 32 (Fig. 1), insbesondere einer trocken- oder nasslaufenden Schaltkupplung, ausgebildet ist. Das Lamellenpaket 30 bildet damit in Abhängigkeit vom Momentenfluss einen Ein- oder einen Ausgangsbereich der Kupplung 32.

Die Ausbildung des Formschlussprofils 20 kann selbstverständlich auch unabhängig von dem Verbindungsbereich des Rotorträgers 18a mit der magnetflussführenden Rotorkomponente 24 erfolgen. Grundsätzlich treffen die dazu erläuterten Ausführungen auch auf das Formschlussprofil 21 zur Anordnung des mit dem Rotor 12 in Drehmitnahme stehenden Elements 30 zu.

Die Außenlamellen 30 sind auf dem Tragbereich 18a axial verlagerbar und stehen mit zwischen diesen und auf einem Innenlamellenträger 32 ebenfalls axial verlagerbaren Innenlamellen 34 in Wechselwirkung. Der Innenlamellenträger 32 ist fest mit einer Kupplungswelle 38 verbunden, über welche ein Drehmoment z.B. auf ein Gangwechselgetriebe übertragen werden kann. Die Lamellen 30, 34 können durch die Wirkung eines Ausrückorgans 36 (Fig. 1) mit einer Betätigungskraft beaufschlagt werden, so dass die im Antriebsstrang mit dem Außenlamellenträger 18a, d.h. dem Rotor 12 und dem Innenlamellenträger 32 verbundenen Antriebsstrangkomponenten in eine Drehmitnahmeverbindung bringbar sind.

Zur Anordnung des Blechpakets 24 und der Kupplungslamellen 30 am Rotor 12 werden diese einfach radial außen bzw. innen in axialer Richtung auf den axialen Tragbereich 18a des Rotorträgers 18 aufgeschoben, wobei gewünschtenfalls zum Blechpaket 24 auch eine Presspassung erzeugt werden kann und dann axial durch in den Figuren nicht dargestellte Sicherungselemente gesichert.

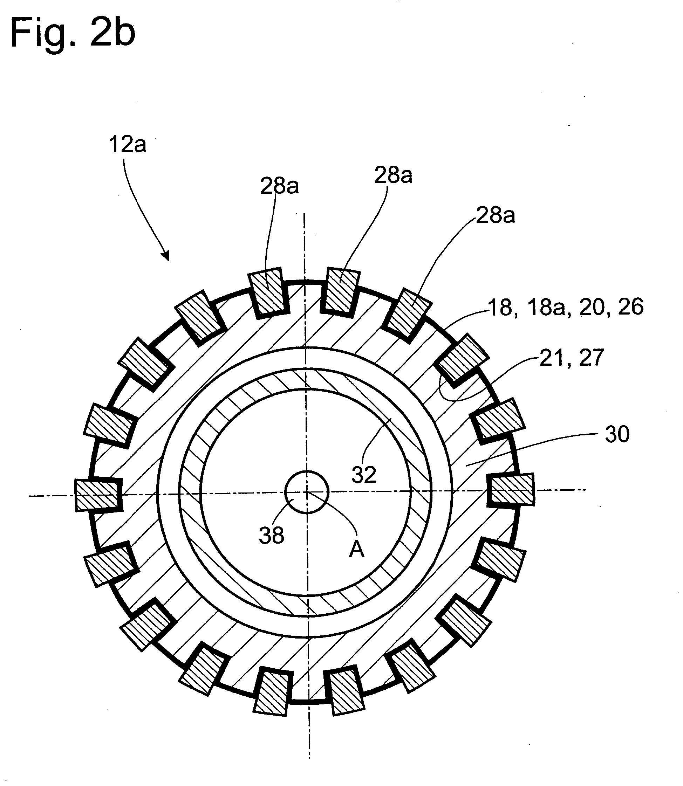

Fig. 2b zeigt einen Rotor 12a mit dem Rotorträger 18 der Fig. 2a mit dem trapezförmigen Formschlussprofil 20, in dessen als Axialnuten 19 ausgeführten Vertiefungen jeweils ein Permanentmagnet 28a eingeschoben oder von radial außen eingesetzt und auf diese Weise an der Außenumfangsfläche 26 des Rotors 12a festgelegt ist. Zur Sicherung der Permanentmagnete 28a kann der Rotor 12a auch zusätzlich in bekannter Art und Weise bandagiert werden.

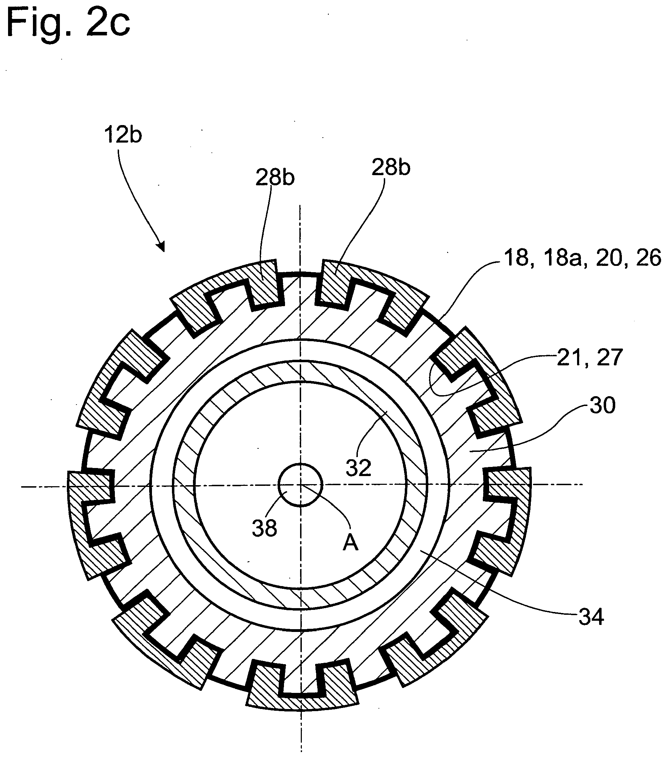

Gemäß dem mit Fig. 2c dargestellten Rotor 12b kann sich ein Magnet auch über mehrere Perioden des Formschlussprofils 20 in Umfangsrichtung am Rotorträger 18 erstrecken, wobei die zum Tragbereich 18a gerichtete Außenkontur eines Permanentmagneten 28b zu dem Formschlussprofil 20 korrespondiert. Damit sind einem Permanentmagnet 28b mehrere, in diesem Beispiel zwei Nuten zugeordnet. Für die weitere Ausgestaltung der mit den Fig. 2a,b dargestellten Rotoren 12a, b wird auf die Fig. 1 und 2a verwiesen.

## Patentansprüche

1. Rotor (12) für eine elektrische Maschine eines Kraftfahrzeugantriebsstranges, wobei der Rotor (12) einen Rotorträger (18) umfasst mit
- einem radialen Tragbereich (18b),
- einem sich axial zur Drehachse (A) des Rotors (12) erstreckenden, mit dem radialen Tragbereich (18b) verbundenen axialen Tragbereich (18a) mit einer äußeren Umfangsfläche (26) und mit einer inneren Umfangsfläche (27),
- einer magnetflussführenden Rotorkomponente (24), welche an der äußeren Umfangsfläche (26) des axialen Tragbereichs (18a) angeordnet ist, wobei
- der axiale Tragbereich (18a) ein sich in Axialrichtung des Rotors (12) erstreckendes Formschlussprofil (20) zur formschlüssigen Aufnahme der magnetflussführenden Rotorkomponente (24) aufweist,
**dadurch gekennzeichnet, dass**
der axiale Tragbereich (18a) an der inneren Umfangsfläche (27) ein Formschlussprofil (21) zur Aufnahme eines mit dem Rotor (12) in Drehmitnahme stehenden Elements (30) aufweist, wobei Vertiefungen im Formschlussprofil (20) der einen Umfangsfläche (26) gleichzeitig als Erhöhungen im Formschlussprofil (21) der jeweils davon abgewandten anderen Umfangsfläche (27) dienen, so dass das an der einen Umfangsfläche (26) ausgeführte Formschlussprofil (20) gleichzeitig das Formschlussprofil (21) der jeweils anderen Umfangsfläche (27) ausbildet.

2. Rotor nach Anspruch 1,
**dadurch gekennzeichnet,**
**dass** die magnetflussführende Komponente als Blechpaket (24) mit einem zu dem axialen Tragbereich korrespondierenden Formschlussprofil (24a) ausgebildet ist (Fig. 2a).

3. Rotor nach Anspruch 1,
**dadurch gekennzeichnet,**
**dass** die magnetflussführende Komponente mindestens einen Permanentmagneten (28a) mit einer zu dem Formschlussprofil (20) des axialen Tragbereichs (18a) korrespondierenden Außenkontur umfasst (Fig. 2b).

4. Rotor nach einem der vorhergehenden Ansprüche,
**dadurch gekennzeichnet,**
**dass** zumindest der axiale Tragbereich (18a) aus einem Blechkörper gefertigt ist und dass die Formschlussprofile (20, 21) an dem Blechkörper ausgeführt sind.

5. Rotor nach einem der vorhergehenden Ansprüche,
**dadurch gekennzeichnet,**
**dass** zumindest ein Formschlussprofil (20, 21) als Radialverzahnung ausgeführt ist.

6. Rotor nach einem der vorhergehenden Ansprüche,
**dadurch gekennzeichnet,**
**dass** das mit dem Rotor (12) in Drehmitnahme stehende Element als Lamelle bzw. Lamellenpaket (30) einer schaltbaren Kupplung (32) ausgebildet ist.

7. Rotor nach einem der vorhergehenden Ansprüche,
**dadurch gekennzeichnet,**
**dass** der axiale Tragbereich (18a) mit dessen Formschlussprofil (20, 21) das Eingangs- oder Ausgangsteil einer Steckverzahnung zur Verbindung mit einer weiteren Antriebsstrangkomponente bildet.

8. Elektrische Maschine (10) zur Verwendung in einem Kraftfahrzeugantriebsstrang, umfassend einen Stator (14) mit einer Wicklung und einen gemäß einem der Ansprüche 1- 7 ausgebildeten Rotor.

## Claims

1. Rotor (12) for an electric machine of a motor vehicle drivetrain, wherein the rotor (12) comprises a rotor carrier (18) having
- a radial supporting region (18b),
- an axial supporting region (18a) that extends axially with respect to the axis of rotation (A) of the rotor (12) and is connected to the radial supporting region (18b), said axial supporting region (18a) having an outer circumferential face (26) and having an inner circumferential face (27),
- a magnetic flux conducting rotor component (24) which is arranged on the outer circumferential face (26) of the axial supporting region (18a), wherein
- the axial supporting region (18a) has a form-fitting profile (20), extending in the axial direction of the rotor (12), for receiving the magnetic flux conducting rotor component (24) in a form-fitting manner,
**characterized in that**
the axial supporting region (18a) has, on its inner circumferential face (27), a form-fitting profile (21) for receiving an element (30) that rotates as one with the rotor (12), wherein recesses in the form-fitting profile (20) of the one circumferential face (26) serve at the same time as elevations in the form-fitting profile (21) of the in each case other circumferential face (27) facing away therefrom, such that the form-fitting profile (20) embodied on the one circumferential face (26) at the same time forms the form-fitting profile (21) of the in each case other circumferential face (27).

2. Rotor according to Claim 1,
**characterized**
**in that** the magnetic flux conducting component is configured as a laminated core (24) having a form-fitting profile (24a) corresponding to the axial supporting region (figure 2a).

3. Rotor according to Claim 1,
**characterized**
**in that** the magnetic flux conducting component comprises at least one permanent magnet (28a) having an external contour corresponding to the form-fitting profile (20) of the axial supporting region (18a) (figure 2b).

4. Rotor according to one of the preceding claims,
**characterized**
**in that** at least the axial supporting region (18a) is produced from a sheet-metal body, and in that the form-fitting profiles (20, 21) are embodied on the sheet-metal body.

5. Rotor according to one of the preceding claims,
**characterized**
**in that** at least one form-fitting profile (20, 21) is embodied as a radial toothing.

6. Rotor according to one of the preceding claims,
**characterized**
**in that** the element that rotates as one with the rotor (12) is configured as a disc or disc pack (30) of a shiftable clutch (32).

7. Rotor according to one of the preceding claims,
**characterized**
**in that** the axial supporting region (18a) forms, with its form-fitting profile (20, 21), the input or output part of a spline toothing for connecting to a further drivetrain component.

8. Electric machine (10) for use in a motor vehicle drivetrain, comprising a stator (14) with a winding, and a rotor configured according to one of Claims 1-7.

## Revendications

1. Rotor (12) pour une machine électrique d'une chaîne cinématique d'un véhicule automobile, le rotor (12) comprenant un support de rotor (18) avec
- une région de support radiale (18b),
- une région de support axiale (18a) s'étendant axialement par rapport à l'axe de rotation (A) du rotor (12), reliée à la région de support radiale (18b), avec une surface périphérique extérieure (26) et avec une surface périphérique intérieure (27),
- un composant de rotor (24) guidant un flux magnétique, qui est disposé au niveau de la surface périphérique extérieure (26) de la région de support axiale (18a),
- la région de support axiale (18a) présentant un profilé d'engagement par correspondance de formes (20) s'étendant dans la direction axiale du rotor (12) pour recevoir par engagement par correspondance de formes le composant de rotor (24) guidant le flux magnétique,
**caractérisé en ce que**
la région de support axiale (18a) présente, au niveau de la surface périphérique intérieure (27), un profilé d'engagement par correspondance de formes (21) pour recevoir un élément (30) en liaison d'entraînement en rotation avec le rotor (12), des renfoncements dans le profilé d'engagement par correspondance de formes (26) de l'une des surfaces périphériques (20) servant simultanément de rehaussements dans le profilé d'engagement par correspondance de formes (21) de l'autre surface périphérique respective (27) opposée à celle-ci, de telle sorte que le profilé d'engagement par correspondance de formes (20) réalisé au niveau de l'une des surfaces périphériques (26) constitue simultanément le profilé d'engagement par correspondance de formes (21) de l'autre surface périphérique respective (27) .

2. Rotor selon la revendication 1,
**caractérisé en ce que**
le composant guidant le flux magnétique est réalisé en tant que paquet de tôles (24) avec un profilé d'engagement par correspondance de formes (24a) correspondant à la région de support axiale (fig. 2a).

3. Rotor selon la revendication 1,
**caractérisé en ce que**
le composant guidant le flux magnétique comprend au moins un aimant permanent (28a) avec un contour extérieur correspondant au profilé d'engagement par correspondance de formes (20) de la région de support axiale (18a) (fig. 2b).

4. Rotor selon l'une quelconque des revendications précédentes,
**caractérisé en ce**
**qu'**au moins la région de support axiale (18a) est fabriquée à partir d'un corps en tôle et **en ce que** les profilés d'engagement par correspondance de formes (20, 21) sont réalisés au niveau du corps en tôle.

5. Rotor selon l'une quelconque des revendications précédentes,
**caractérisé en ce**
**qu'**au moins un profilé d'engagement par correspondance de formes (20, 21) est réalisé sous forme de denture radiale.

6. Rotor selon l'une quelconque des revendications précédentes,
**caractérisé en ce que**
l'élément en liaison d'entraînement en rotation avec le rotor (12) est réalisé sous forme de lamelle ou sous forme de paquet de lamelles (30) d'un embrayage commutable (32).

7. Rotor selon l'une quelconque des revendications précédentes,
**caractérisé en ce que**
la région de support axiale (18a) forme, avec son profilé d'engagement par correspondance de formes (20, 21) la partie d'entrée ou de sortie d'une denture d'enfichage destinée à la liaison à un autre composant de la chaîne cinématique.

8. Machine électrique (10) destinée à l'utilisation dans une chaîne cinématique d'un véhicule automobile, comprenant un stator (14) avec un enroulement et un rotor réalisé selon l'une quelconque des revendications 1 à 7.
